# EUROPEAN PATENT SPECIFICATION

(11) **EP 3 981 681 B1**
(45) Date of publication and mention of the grant of the patent: **01.01.2025**
(21) Application number: 20839860.2
(22) Date of filing: 08.07.2020
(51) Int. Cl.: B62K 19/30, B62K 25/28, F16B 2/06, F16B 2/12, F16B 5/06, F16B 5/08

(54) **SWINGARM FIXING HANGER**
SCHWENKARM FIXIERENDER BÜGEL
ÉTRIER DE FIXATION DE BRAS OSCILLANT

(30) Priority: 12.07.2019 KR 20190084311
(43) Date of publication of application: 13.04.2022
(73) Proprietor: Park, Keun Ho, Daegu 42004 (KR)
(72) Inventor: PARK, Gye Jeung, Daegu 42004 (KR); PARK, Keun Ho, Daegu 42004 (KR)
(74) Representative: González López-Menchero, Álvaro Luis
(86) International application number: PCT/KR2020/008877
(87) International publication number: WO 2021/010643

(56) References cited:
- JP-A- 2007 132 426
- JP-A- H04 208 688
- KR-B1- 101 369 895
- US-A- 4 540 062
- US-A- 4 540 062
- US-A- 5 884 717
- US-A1- 2006 279 061
- US-A1- 2007 001 418
- US-A1- 2007 001 418

## Description

### Technical Field

The present invention relates generally to a swingarm fixing hanger. More particularly, the present invention relates to a swingarm fixing hanger in which a fixing bracket fixed to a swingarm and a support cover coupled detachably to the fixing bracket press and fasten a fixed shaft of a wheel from opposite sides thereof, and fastening screws opposing to each other press and fasten the fixed shaft in directions perpendicular to the pressing directions of the fixing bracket and the support cover such that the fixed shaft can be securely fixed in two or four directions and noise generation and damage to the fixed shaft can be prevented without shaking of the fixed shaft despite a load applied to the fixed shaft of the wheel.

### Background Art

A swingarm for connecting a wheel to a body of a vehicle such as a bicycle or motorcycle is provided in the vehicle as in the following patent document, and a fixed shaft, which is the center of rotation of the wheel, is fixed to and supported by the swingarm.

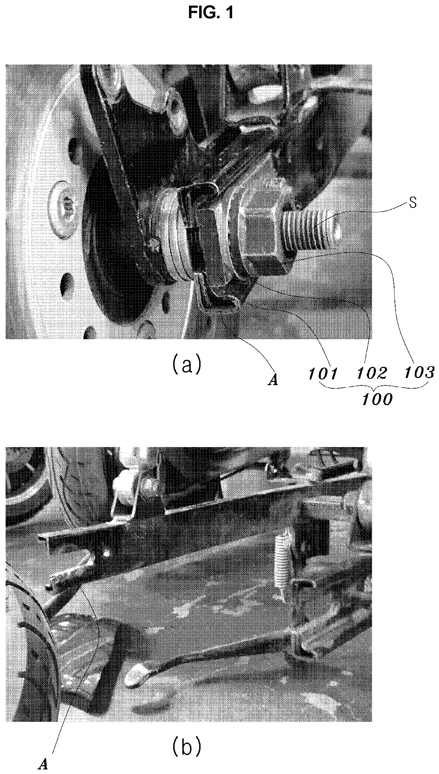

As illustrated in FIG. 1, as for the conventional swingarm, a separate fixing device 100 fixes the swingarm A to the rear wheel of the vehicle and, more precisely, fixes the swingarm A to the fixed shaft S of the rear wheel.

In this case, as for the conventional fixing device 100, after a support steel plate 101 is inserted to the swingarm A to be in close contact therewith, the fixed shaft S passes through the support steel plate 101, and the support steel plate 101 is fastened by a fastening nut 103 fitted over the fixed shaft S such that the support steel plate 101 can be in close contact with the swingarm A to be coupled thereto. A washer 102 having the shape of a sawtooth is inserted between the support steel plate 101 and the fixed shaft S to increase the coupling force of the support steel plate to the swingarm.

However, as for the conventional fixing device 100, when a vehicle brakes or a lot of force is applied to the rear wheel of the vehicle, a large load is generated on the fixed shaft S of the rear wheel, and the coupling force of the fixing device 100 that fixes the fixed shaft S is decreased, which causes the fixed shaft S to shake. As illustrated in FIG. 1(b), the swingarm A is gradually opened to have a gap formed therein, so noise may be generated or the fixed shaft S may break.

Furthermore, since the swingarm A is generally manufactured at low cost by forming a steel plate, there is a problem that such an accident occurs easily.

In addition, in recent years, the use of an electric motorcycle or bicycle powered by electricity is increasing. In particular, the adoption of an in-wheel method in which a drive motor is provided within a wheel is increasing, and a regenerative braking system that generates electricity by operating the drive motor as a generator is applied to such an electric vehicle.

In this case, in the process of braking by using the drive motor as a generator, a substantial load is generated on the wheel in which the drive motor is provided. The load is 3 to 4 times higher than a load generated when driving a normal motor.

Accordingly, in the electric vehicle of the in-wheel method that performs regenerative braking, the coupling force of the conventional fixing device 100 is more easily decreased, which causes the gap, and as a result, there is a problem that noise or accidents occur more frequently.

### (Patent Document)

Korean Patent No. 10-0873537 (registered on December 4, 2008) "TWO-WHEELED MOBILE BODY AND MOTORCYCLE HAVING SAME".

In the state of the art is known the document JP H04 208688, which discloses the preamble of claim 1.

### Disclosure

### Technical Problem

The present invention has been made to solve the above problems, and the present invention is intended to propose a swingarm fixing hanger in which a fixed shaft of a wheel is pressed and fastened from opposite sides thereof by a fixing bracket fixed to a swingarm and a support cover coupled detachably to the fixing bracket such that the fixed shaft can be securely fixed and easily mounted to the swingarm without the shaking of the fixed shaft despite a load applied to the fixed shaft of the wheel.

The present invention is intended to propose a swingarm fixing hanger in which fastening screws are fastened to the fixing bracket in directions opposing to each other to press the fixed shaft, and an insertion groove into which the fixed shaft is inserted in a direction perpendicular to the fastening screws and the support cover coupled to the fixing bracket press the fixed shaft such that the fixed shaft is pressed in four directions perpendicular to each other to be more securely fixed.

The present invention is intended to propose a swingarm fixing hanger in which when a fastening screw is provided in a vertical direction or a left-to-right direction, the fastening screw is provided at a side surface or lower side of the fixing bracket such that the coupling direction of the support cover is perpendicular to the fastening screw so as to respond to various shapes of the swingarm.

The present invention is intended to propose a swingarm fixing hanger in which a tightening screw is inserted into the support cover to fix the support cover to the fixing bracket, and the fixed shaft is pressed by a protruding press end of the support cover such that the coupling of the support cover is easily performed and the fixed shaft is stably supported.

The present invention is intended to propose a swingarm fixing hanger in which the three peripheral surfaces of the fixing bracket are fixed to the swingarm by welding such that the shaking of the fixing bracket is more effectively prevented.

### Technical Solution

In order to accomplish the above objectives, the swingarm fixing hanger of the present disclosure having the following configurations is embodied according to embodiments.

According to an embodiment of the present invention, the swingarm fixing hanger according to the present invention includes: a fixing bracket being in close contact with the swingarm to be coupled thereto, with a fixed shaft of a rear wheel of the electric vehicle being inserted into the fixing bracket to be fastened thereto, and a support cover coupled detachably to a side of the fixing bracket so as to press the fixed shaft, wherein the fixing bracket and the support cover press and fasten the fixed shaft in directions opposing to each other.

According to another embodiment of the present invention, in the swingarm fixing hanger according to the present invention, the fixing bracket may include: fastening screws inserted into the fixing bracket in directions opposing to each other to press the fixed shaft in the opposing directions, which is inserted into the fixing bracket, and through holes formed through the fixing bracket in the opposing directions, the fastening screws being inserted into the through holes, wherein a direction in which each of the fastening screws presses the fixed shaft may be orthogonal to a direction in which each of an insertion groove and the support cover presses the fixed shaft such that the fixing bracket and the support cover press the fixed shaft in four directions perpendicular to each other.

According to a further embodiment of the present invention, in the swingarm fixing hanger according to the present invention, the fixing bracket may include: an insertion groove recessed to be open at a side thereof, the fixed shaft being inserted into the insertion groove, and a fastening nut coupled to the fixed shaft inserted into the insertion groove and configured to fasten the fixed shaft to the fixing bracket, wherein the support cover may be coupled to the open side of the insertion groove so as to press the fixed shaft.

According to still another embodiment of the present invention, in the swingarm fixing hanger according to the present invention, an inner side of the insertion groove may be configured to be round so as to be in close contact with the fixed shaft.

According to still another embodiment of the present invention, in the swingarm fixing hanger according to the present disclosure, the support cover may include: a protruding press end protruding therefrom toward a direction in which the support cover is coupled to the fixing bracket so as to press the fixed shaft, and a tightening screw protruding from the support cover toward the fixing bracket so as to be inserted into and fastened to the fixing bracket.

According to still another embodiment of the present invention, in the swingarm fixing hanger according to the present invention, the protruding press end may include a concave surface formed by being recessed to be round therefrom by a predetermined depth such that the concave surface is in close contact with an outer surface of the fixed shaft.

According to still another embodiment of the present invention, in the swingarm fixing hanger according to the present invention, the fastening screw may press the fixed shaft from each of upper and lower sides of the fixed shaft, or from each of opposite sides of the fixed shaft.

According to still another embodiment of the present invention, the swingarm fixing hanger according to the present invention may include an adhesion fixing part allowing the fixing bracket to be fixed to the swingarm by welding along three peripheral surfaces of the fixing bracket.

### Advantageous Effects

The swingarm fixing hanger of the present invention can obtain the flowing effects by components to be described below, a combination thereof, and a use relationship therebetween according to the embodiments described above.

According to the present invention, the fixing bracket fixed to the swingarm and the support cover coupled detachably to the fixing bracket press and fasten the fixed shaft of a wheel from the opposite sides thereof, thereby securely fixing and easily mounting the fixed shaft to the swingarm without the shaking of the fixed shaft despite a load applied to the fixed shaft of the wheel.

According to the present invention, fastening screws are fastened to the fixing bracket in directions opposing to each other so as to press the fixed shaft, and the insertion groove into which the fixed shaft is inserted and the support cover coupled to the fixing bracket press the fixed shaft in directions perpendicular to the pressing directions of the fastening screws such that the fixed shaft is pressed in the four directions perpendicular to each other, thereby fixing the fixed shaft more securely.

According to the present invention, in a case in which a fastening screw is provided in a vertical direction or a left-to-direction, the fastening screw is provided at a side surface or lower side of the fixing bracket such that the coupling direction of the support cover is perpendicular to the fastening screw, thereby responding to various shapes of the swingarm.

According to the present invention, a tightening screw is inserted into the support cover such that the support cover is coupled to the fixing bracket, and the protruding press end of the support cover presses the fixed shaft, thereby facilitating the coupling of the support cover and supporting the fixed shaft stably.

According to the present invention, the three peripheral surfaces of the fixing bracket are fixed to the swingarm by welding, thereby more effectively preventing the shaking of the fixing bracket.

### Description of Drawings

FIGS. 1(a) and 1(b) are views illustrating the fixing device of a conventional swingarm and the deformed state of the swingarm due to the use of the fixing device.
FIGS. 2(a) and 2(b) are exploded perspective views of swingarm fixing hangers according to a first embodiment of the present invention.
FIGS. 3(a) and 3(b) are sectional views of the coupled states of the swingarm fixing hangers of FIGS. 2(a) and 2(b), respectively.
FIGS. 4(a) and 4(b) are an exploded perspective view of a swingarm fixing hanger and a sectional view of a coupled state thereof, respectively, according to a second embodiment of the present invention.
FIGS. 5(a) and 5(b) are views illustrating a state in which the swingarm fixing hanger is being mounted.
FIG. 6 is a view illustrating a state in which the swingarm fixing hanger is mounted to the rear wheel of an electric two-wheeled vehicle.
FIGS. 7(a) and 7(b) are views illustrating the mounted state of the swingarm fixing hanger according to a third embodiment of the present invention.
FIG. 8 is a view of a fixing bracket of each of FIGS. 7(a) and 7(b) viewed from a lower side thereof.

### <Description of the Reference Numerals in the Drawings>

1: Fixing bracket
11: Insertion groove 12: Fastening screw 13: Through hole
14: Fastening hole 15: Fastening nut
3: Support cover
31: Protruding press end 311: Concave surface
32: Tightening screw 33: Screw insertion hole
5: Adhesion fixing part
A: Swingarm S: Fixed shaft

### * Description of reference numerals related to a prior art

100: Fixing device
101: Support steel plate 102: Washer 103: Fastening nut

### Best Mode

Hereinafter, exemplary embodiments of a swingarm fixing hanger according to the present invention will be described in detail with reference to the accompanying drawings. In the following description of the present invention, when it is determined that a detailed description of a well-known function or configuration unnecessarily obscures the present invention, the detailed description thereof will be omitted.

Throughout this specification, when a part "includes" a certain element, it means that other elements may be further included, rather than excluding other elements.

The swingarm fixing hanger according to first and second embodiments of the present invention is described with reference to FIGS. 1(a) and 1(b) to 6 and includes: a fixing bracket 1 being in close contact with a swingarm A to be coupled thereto, a fixed shaft S of a wheel being inserted into fixing bracket 1 to be fastened thereto, a support cover 3 coupled to a side of the fixing bracket 1 so as to press the fixed shaft S, and an adhesion fixing part 5 fixing the fixing bracket 1 to the swingarm A by welding along three peripheral surfaces of the fixing bracket 1.

In an electric vehicle such as an electric motorcycle and an electric bicycle, the swingarm fixing hanger according to the present invention is an apparatus by which the swingarm
A connecting a body with a wheel is fixed to the fixed shaft S which is the center of the rotation of the wheel. Particularly, the swingarm fixing hanger may be provided on the swingarm A which connects a wheel having a drive motor as an in-wheel type provided therein with the body, and may be provided on the swingarm A by which the wheel and body of each of various electric vehicles, such as two-wheeled, three-wheeled, and four-wheeled electric vehicles, are connected to each other irrespective of the number and positions of wheels.

As described in the background art, when a regenerative braking system is applied to a wheel in which a drive motor as an in-wheel type is provided, a load 3 to 4 times higher than a load of a normal wheel is applied to the wheel in which the drive motor is provided. Accordingly, the swingarm fixing hanger increases the fastening force of the fixed shaft S of the wheel to the swingarm A such that the shaking of the fixed shaft S is prevented despite a load applied to the fixed shaft S, the swingarm A is prevented from having a gap caused by the shaking of the fixed shaft S, and noise generation and damage to the fixed shaft S due to the gap are prevented. However, the swingarm fixing hanger is not limited thereto and may be used as an apparatus fixing a fixed shaft to each of various swingarms which connects a wheel with a vehicle body regardless of whether a drive motor is provided in the wheel.

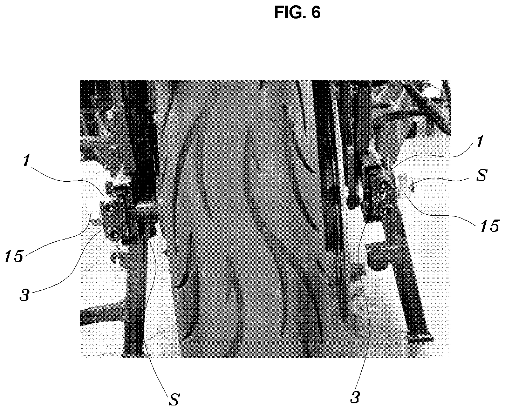

In a state in which the fixing bracket 1 is fixed to the swingarm A, the fixing bracket 1 is configured such that the fixed shaft S of a rear wheel of a two-wheeled vehicle is inserted into and fastened to the fixing bracket 1 such that the state of the fixed shaft S fixed to the swingarm A can be maintained. As illustrated in FIG. 6, the fixing bracket 1 may be fitted over the fixed shaft S of each of the opposite sides of the rear wheel. The fixing bracket 1 may be formed to have a cuboid shape having a predetermined volume, and the fixed shaft S is inserted into a side of the fixing bracket 1 such that the fixed shaft can be supported by the fixing bracket 1. Furthermore, the fixed shaft S inserted into the fixing bracket 1 is pressed and supported by the support cover 3 coupled to the fixing bracket 1, whereby the fixed shaft S can be pressed and be securely fastened by the fixing bracket 1 and the support cover 3 respectively at the opposite sides of the fixed shaft.

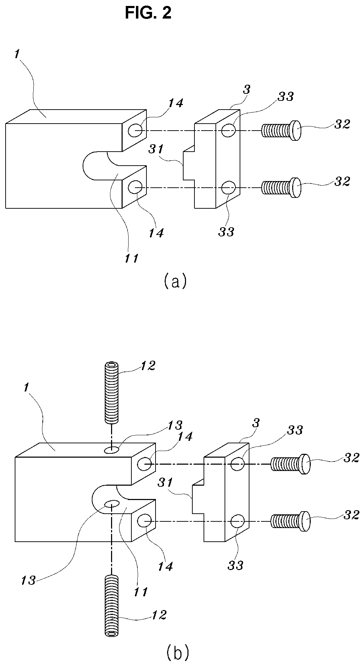

In addition, as illustrated in FIG. 2(b), the fixing bracket 1 is configured to press the fixed shaft S even from the upper and lower sides thereof. Accordingly, the fixed shaft S may be pressed in four directions perpendicular to each other such that the fixed shaft S is more securely fixed.

The fixing bracket 1 may include an insertion groove 11, a fastening screw 12, a through hole 13, a fastening hole 14, and a fastening nut 15.

The insertion groove 11 is formed at a side of the fixing bracket 1 such that the insertion groove 11 is recessed by a predetermined depth and is configured such that the insertion of the fixed shaft S can be performed through the side of the fixing bracket. As illustrated in FIG. 2, the insertion groove 11 is preferably formed at a first side surface of the fixing bracket 1. The insertion groove 11 is open at a side thereof such that the insertion of the fixed shaft S can be performed through the first side surface of the fixing bracket 1, whereby in the state in which the fixing bracket 1 is fixed to the swingarm A, the fixed shaft S can be easily inserted into the fixing bracket 1. In other words, the fixing bracket 1 is fixed to the swingarm A by the adhesion fixing part 5, and the fixed shaft S formed on the wheel may be inserted into and fastened to the fixing bracket 1. In this case, the insertion of the fixed shaft S may be performed through the insertion groove 11 formed to be open on the first side surface of the fixing bracket 1 such that the insertion of the fixed shaft S can be easily performed without opening the swingarm A.

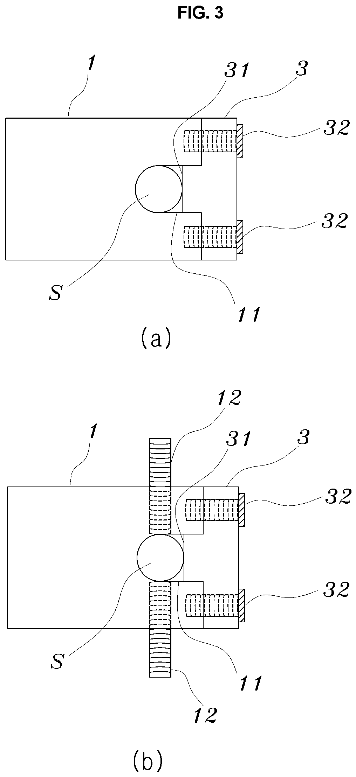

In addition, the recessed inner surface of the insertion groove 11 may be configured to be round to be in close contact with the fixed shaft S, whereby as illustrated in FIGS. 3(a) and 3(b), in a state in which the fixed shaft S is inserted into the insertion groove 11, the insertion groove 11 may press and fasten the fixed shaft S stably. In this case, while coupling the support cover 3 to the fixing bracket 1, a protruding press end 31 of the support cover 3 to be described later is inserted into the insertion groove 11 such that the fixed shaft S is pressed by the protruding press end 31. Accordingly, the fixed shaft S inserted into the insertion groove 11 is pressed by the inner surface of the insertion groove 11 and the protruding press end 31 in opposing directions to each other such that the fixed shaft S can be securely fastened.

Furthermore, as illustrated in FIGS. 2(b) and 3(b), in a case in which the fastening screw 12 presses the fixed shaft S from each of the upper and lower sides of the fixed shaft S, the through hole 13 is formed in each of the upper and lower sides of the insertion groove 11 such that the fastening screw 12 can be inserted into the insertion groove 11.

The fastening screws 12 are configured to press the fixed shaft S by being inserted into the fixing bracket 1 in a direction perpendicular to a direction in which the fixed shaft S is pressed by the insertion groove 11 and the protruding press end 31 of the support cover 3. In a case in which the insertion groove 11 and the support cover 3 are provided at the opposite sides of the fixed shaft S, the fastening screws 12 may press the fixed shaft S in a vertical opposing directions. The fastening screw 12 is threaded along a circumference thereof such that the fastening screw 12 can be inserted into and fastened to the through hole 13 formed in the fixing bracket 1. The through hole 13 is formed in each of the upper and lower sides of the fixing bracket 1 such that the fastening screw 12 is inserted into the through hole 13 until the fastening screw 12 is in close contact with the fixed shaft S.

The through hole 13 is formed through the fixing bracket 1 and is configured such that the fastening screw 12 is inserted into the through hole 13. The through hole 13 is threaded along an inner surface thereof, and is formed in each of the upper and lower sides of the insertion groove 11. Accordingly, the fastening screw 12 is inserted into the through hole 13 formed in each of the upper and lower sides of the insertion groove 11 and protrudes into the insertion groove 11 such that the protruding fastening screw 12 can press the fixed shaft S from each of upper and lower sides thereof.

The fastening hole 14 is formed on the first side surface of the fixing bracket 1 by being recessed therefrom by a predetermined depth such that a tightening screw 32 of the support cover 3 to be described later is inserted into the fastening hole 14. The fastening hole 14 may include a pair of fastening holes formed respectively at the upper and lower sides of the insertion groove 11. A thread may be formed in the fastening hole 14 such that the tightening screw 32 is inserted into and fastened to the fastening hole, whereby the support cover 3 can be in close contact with the first side surface of the fixing bracket 1. Accordingly, due to the close contact of the support cover 3 with the fixing bracket 1, the protruding press end 31 formed on the support cover 3 can forcibly press and support the fixed shaft S.

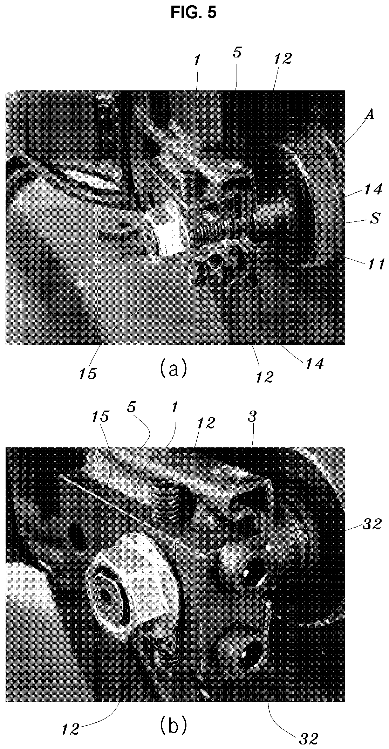

The fastening nut 15 is configured to be fitted over and fastened to the fixed shaft S. As illustrated in FIG. 5, after the fixed shaft S is inserted into the fixing bracket 1, the fastening nut 15 is fitted over and fastened to the fixed shaft S such that the state of the fixed shaft S fixed to the fixing bracket 1 can be maintained. In this case, the fixed shaft S is pressed in two directions or four directions perpendicular to each other as described above such that the fixed shaft S is securely fixed to the swingarm A not to be shaken. Accordingly, the deformation of the swingarm A, noise generation, and damage to the fixed shaft S are prevented.

The support cover 3 is configured to be coupled to the first side surface of the fixing bracket 1 and to press the fixed shaft S inserted into the fixing bracket 1 from a side thereof. As illustrated in FIG. 5(a), in a state in which the fixed shaft S is inserted into the insertion groove 11 of the fixing bracket 1, the support cover 3 is coupled to the fixing bracket 1 and is in close contact with the fixing bracket 1 as illustrated in FIG. 5(b). To this end, the support cover 3 may include the protruding press end 31, the tightening screw 32, and a screw insertion hole 33.

The protruding press end 31 is configured to protrude from the center of the support cover 3 toward a direction in which the support cover 3 is coupled to the fixing bracket 1. As illustrated in FIGS. 3(a) and 3(b), the protruding press end 31 presses and fastens the fixed shaft S while the support cover 3 is coupled to the fixing bracket 1.

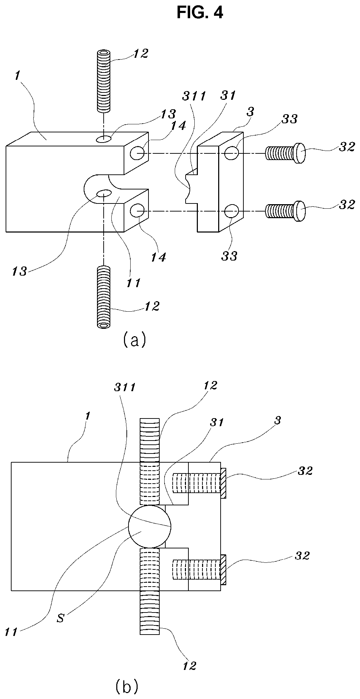

In addition, as illustrated in FIGS. 4(a) and 4(b), the protruding press end 31 may include a concave surface 311 recessed by a predetermined depth. The concave surface 311 may be formed by being recessed to be round such that the protruding press end 31 can be in closer contact with the fixed shaft S, whereby the support cover 3 can provide a stronger fastening force to the fixed shaft S.

The tightening screw 32 is configured to couple the support cover 3 to the fixing bracket 1 and to pass through the screw insertion hole 33, and is inserted into the fastening hole 14 of the fixing bracket 1 to be coupled thereto. The tightening screw 32 may be provided at each of the upper and lower sides of the protruding press end 31.

The screw insertion hole 33 is configured to allow the tightening screw 32 to be inserted thereinto, and is formed through the support cover 3, and may include a pair of screw insertion holes respectively at the upper and lower sides of the protruding press end 31. Accordingly, the tightening screw 32 passing though the screw insertion hole 33 is inserted into the fastening hole 14 to be fastened thereto such that the support cover 3 is in close contact with the fixing bracket 1 to be coupled thereto, whereby the protruding press end 31 can forcibly press and fasten the fixed shaft S.

The adhesion fixing part 5 is configured such that the fixing bracket 1 is fixed to the swingarm A by welding along the three peripheral surfaces of the fixing bracket 1, and is preferably bonded to the swingarm A by argon welding. The adhesion fixing part 5 allows the upper and lower sides and second side surface of the fixing bracket 1 except for the coupling side of the support cover 3 to be bonded and fixed to the swingarm A. Furthermore, the adhesion fixing part 5 may be formed prior to the insertion of the fixed shaft S into the fixing bracket 1, and in the state in which the fixing bracket 1 is fixed to the swingarm A by the adhesion fixing part 5, the insertion of the fixed shaft S may be performed through the insertion groove 11 as illustrated in FIG. 5(b).

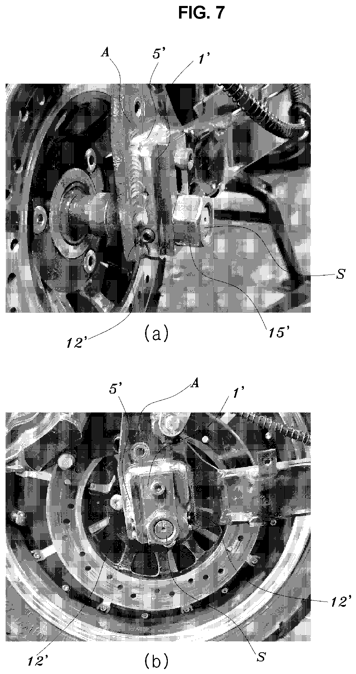

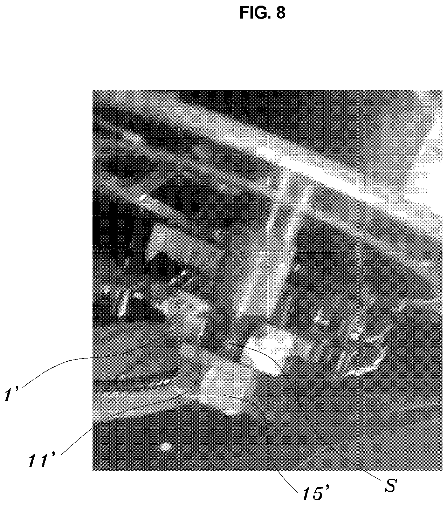

When describing the swingarm fixing hanger of the present invention according to a third embodiment with reference to FIGS. 7(a), 7(b), and 8, the swingarm fixing hanger includes a fixing bracket 1', a support cover 3', and an adhesion fixing part 5' in the same manner as the first embodiment. However, unlike the first embodiment in which the fixing bracket 1 has the insertion groove 11 formed at the first side surface thereof, as illustrated in FIG. 8, an insertion groove 11' is formed on a lower side of the fixing bracket 1' such that the fixed shaft S can be inserted into the insertion groove 11 through the lower side of the fixing bracket 1'. Accordingly, the fixing bracket 1' presses the fixed shaft S by the inner surface of the insertion groove 11' from the upper side of the fixed shaft toward the lower side thereof, and the support cover 3' presses the fixed shaft S from the lower side toward the upper side, and a fastening screw 12' is inserted into the fixing bracket 1' from each of the opposite sides of the fixed shaft S such that the fastening screws 12' can press and fasten the fixed shaft S. Even in such a case, three peripheral surfaces of the fixing bracket 1', that is, the peripheries of the opposite side surfaces of the fixing bracket 1' and an upper surface thereof, can be fixed to the swingarm A by the adhesion fixing part 5'. Accordingly, the coupling position of the swingarm fixing hanger may be changed according to the shape of the swingarm A so as to be securely fastened to the swingarm.

## Claims

1. A swingarm fixing hanger connecting a swingarm of an electric vehicle with a fixed shaft (S) of a wheel thereof to be fixed to each other, the fixing hanger comprising:
a fixing bracket (1), (1') being in close contact with the swingarm to be coupled thereto, with a fixed shaft (S)of a rear wheel of the electric vehicle being inserted into the fixing bracket to be fastened thereto, and
a support cover (3, 3') coupled detachably to a side of the fixing bracket so as to press the fixed shaft (S),
wherein the fixing bracket (1), (1') and the support cover (3) (3') press and fasten the fixed shaft (S) in directions opposing to each other,
**characterized in that** it additionally comprises:
fastening screws (12) (12') inserted into the fixing bracket (1), (1') in directions opposing to each other to press the fixed shaft (S) in the opposing directions, which is inserted into the fixing bracket (1), (1'), and
through holes formed through the fixing bracket (1), (1') in the opposing directions, the fastening screws (12), (12') being inserted into the through holes,
wherein a direction in which each of the fastening screws (12) (12') presses the fixed shaft (S) is orthogonal to a direction in which each of an insertion groove (11) and the support cover (3, 3') presses the fixed shaft (S) such that the fixing bracket (1), (1') and the support cover (3, 3') press the fixed shaft (S) in four directions perpendicular to each other.

2. The fixing hanger of claim 1, wherein the fixing bracket comprises:
an insertion groove (11) recessed to be open at a side thereof, the fixed shaft (S) being inserted into the insertion groove (11), and
a fastening nut (15) coupled to the fixed shaft (S) inserted into the insertion groove (11) and configured to fasten the fixed shaft (S) to the fixing bracket (1), (1'),
wherein the support cover (3, 3') is coupled to the open side of the insertion groove (11) so as to press the fixed shaft (S).

3. The fixing hanger of claim 2, wherein an inner side of the insertion groove (11) is configured to be round so as to be in close contact with the fixed shaft. (S)

4. The fixing hanger of claim 2, wherein the support cover (3, 3') comprises:
a protruding press (31) end protruding therefrom toward a direction in which the support cover (3, 3') is coupled to the fixing bracket (1), (1') so as to press the fixed shaft (S), and
a tightening screw protruding from the support cover (3, 3') toward the fixing bracket (1), (1') so as to be inserted into and fastened to the fixing bracket (1), (1').

5. The fixing hanger of claim4, wherein the protruding press end (31) comprises a concave surface (311) formed by being recessed to be round therefrom by a predetermined depth such that the concave surface (311) is in close contact with an outer surface of the fixed shaft (S).

6. The fixing hanger of claim 1, wherein the fastening screw presses the fixed shaft (S) from each of upper and lower sides of the fixed shaft (S), or from each of opposite sides of the fixed shaft (S).

7. The fixing hanger of claim 1, wherein the swingarm fixing hanger comprises an adhesion fixing part (5), (5') allowing the fixing bracket (1), (1') to be fixed to the swingarm by welding along three peripheral surfaces of the fixing bracket (1), (1').

## Patentansprüche

1. Schwingenbefestigungsaufhängung, die eine Schwinge eines elektrischen Fahrzeugs mit einer festen Welle (S) eines Rades desselben verbindet, um aneinander befestigt zu werden, wobei die Befestigungsaufhängung umfasst:
einen Befestigungsträger (1), (1'), der in engem Kontakt mit der Schwinge steht, um daran gekoppelt zu werden, wobei eine feststehende Welle (S) eines Hinterrades des Elektrofahrzeugs in den Befestigungsträger eingeführt wird, um daran befestigt zu werden, und
einen Stützdeckel (3, 3'), der abnehmbar mit einer Seite des Befestigungsbügels verbunden ist, um die feststehende Welle (S) zu drücken,
wobei der Befestigungsbügel (1), (1') und der Stützdeckel (3) (3') die feste Welle (S) in entgegengesetzten Richtungen drücken und befestigen,
**dadurch gekennzeichnet, dass** es zusätzlich umfasst:
Befestigungsschrauben (12) (12'), die in den Befestigungsbügel (1), (1') in entgegengesetzten Richtungen eingesetzt werden, um die feststehende Welle (S) in den entgegengesetzten Richtungen zu drücken, die in den Befestigungsbügel (1), (1') eingesetzt ist, und
Durchgangslöcher, die in entgegengesetzten Richtungen durch den Befestigungsbügel (1), (1') verlaufen, wobei die Befestigungsschrauben (12), (12') in die Durchgangslöcher eingesetzt werden,
wobei eine Richtung, in der jede der Befestigungsschrauben (12) (12') auf die feststehende Welle (S) drückt, orthogonal zu einer Richtung ist, in der jede von einer Einführungsnut (11) und der Stützabdeckung (3, 3') auf die feststehende Welle (S) drückt, so dass die Befestigungsklammer (1), (1') und die Stützabdeckung (3, 3') die feststehende Welle (S) in vier zueinander senkrechten Richtungen drücken.

2. Der Befestigungsbügel nach Anspruch 1, wobei der Befestigungsbügel umfasst:
eine Einführungsnut (11), die so ausgespart ist, dass sie an einer Seite offen ist, wobei der feste Schaft (S) in die Einführungsnut (11) eingeführt wird, und
eine Befestigungsmutter (15), die mit dem festen Schaft (S) gekoppelt ist, der in die Einführungsnut (11) eingesetzt ist, und die so konfiguriert ist, dass sie den festen Schaft (S) an der Befestigungskonsole (1), (1') befestigt,
wobei der Stützdeckel (3, 3') mit der offenen Seite der Einführungsnut (11) gekoppelt ist, um die feste Welle (S) zu drücken.

3. Befestigungsaufhänger nach Anspruch 2, wobei eine Innenseite der Einführungsnut (11) rund ausgebildet ist, um in engem Kontakt mit dem festen Schaft zu stehen. (S)

4. Befestigungsbügel nach Anspruch 2, wobei die Stützabdeckung (3, 3') umfasst:
ein vorstehendes Pressende (31), das davon in eine Richtung vorsteht, in der die Stützabdeckung (3, 3') mit dem Befestigungsbügel (1), (1') verbunden ist, um die feste Welle (S) zu drücken, und
eine Feststellschraube, die von der Stützabdeckung (3, 3') in Richtung des Befestigungsbügels (1), (1') vorsteht, um in den Befestigungsbügel (1), (1') eingeführt und an diesem befestigt zu werden.

5. Befestigungsaufhänger nach Anspruch 4, wobei das vorstehende Pressenende (31) eine konkave Oberfläche (311) aufweist, die durch eine Aussparung gebildet wird, die um eine vorbestimmte Tiefe rund ist, so dass die konkave Oberfläche (311) in engem Kontakt mit einer Außenfläche des festen Schafts (S) steht.

6. Befestigungsaufhänger nach Anspruch 1, wobei die Befestigungsschraube den festen Schaft (S) von jeder der oberen und unteren Seiten des festen Schaftes (S) oder von jeder der gegenüberliegenden Seiten des festen Schaftes (S) drückt.

7. Befestigungsaufhängung nach Anspruch 1, wobei die Schwingenbefestigungsaufhängung ein Adhäsionsbefestigungsteil (5), (5') umfasst, das es ermöglicht, die Befestigungshalterung (1), (1') durch Schweißen entlang dreier Umfangsflächen der Befestigungshalterung (1), (1') an der Schwinge zu befestigen.

## Revendications

1. Suspension de fixation de bras oscillant reliant un bras oscillant d'un véhicule électrique à un arbre fixe (S) d'une roue de ce véhicule pour être fixés l'un à l'autre, la suspension de fixation comprenant :
un support de fixation (1), (1') en contact étroit avec le bras oscillant pour y être accouplé, un arbre fixe (S) d'une roue arrière du véhicule électrique étant inséré dans le support de fixation pour y être fixé, et
un couvercle de support (3, 3') couplé de manière amovible à un côté de l'étrier de fixation afin de presser l'arbre fixe (S),
dans lequel le support de fixation (1), (1') et le couvercle de support (3) (3') pressent et fixent l'arbre fixe (S) dans des directions opposées l'une à l'autre,
**caractérisé par le fait qu'**il comprend en outre
des vis de fixation (12) (12') insérées dans le support de fixation (1), (1') dans des directions opposées l'une à l'autre pour presser l'arbre fixe (S) dans les directions opposées, qui est inséré dans le support de fixation (1), (1'), et
des trous de passage formés à travers le support de fixation (1), (1') dans les directions opposées, les vis de fixation (12), (12') étant insérées dans les trous de passage,
dans lequel une direction dans laquelle chacune des vis de fixation (12) (12') appuie sur l'arbre fixe (S) est orthogonale à une direction dans laquelle une rainure d'insertion (11) et le couvercle de support (3, 3') appuient sur l'arbre fixe (S) de sorte que le support de fixation (1), (1') et le couvercle de support (3, 3') appuient sur l'arbre fixe (S) dans quatre directions perpendiculaires l'une par rapport à l'autre.

2. Suspension de fixation de la revendication 1, dans laquelle le support de fixation comprend :
une rainure d'insertion (11) évidée pour être ouverte sur un de ses côtés, l'arbre fixe (S) étant inséré dans la rainure d'insertion (11), et
un écrou de fixation (15) couplé à l'arbre fixe (S) inséré dans la rainure d'insertion (11) et configuré pour fixer l'arbre fixe (S) au support de fixation (1), (1'),
dans lequel le couvercle de support (3, 3') est couplé au côté ouvert de la rainure d'insertion (11) de manière à presser l'arbre fixe (S).

3. Le cintre de fixation de la revendication 2, dans lequel un côté intérieur de la rainure d'insertion (11) est configuré pour être rond afin d'être en contact étroit avec l'arbre fixe. (S)

4. Le cintre de fixation de la revendication 2, dans lequel le couvercle de support (3, 3') comprend :
une extrémité de presse en saillie (31) faisant saillie vers une direction dans laquelle le couvercle de support (3, 3') est couplé au support de fixation (1), (1') de manière à presser l'arbre fixe (S), et
une vis de serrage faisant saillie du couvercle de support (3, 3') vers le support de fixation (1), (1') de manière à être insérée dans le support de fixation (1), (1') et à y être fixée.

5. Le cintre de fixation de la revendication 4, dans lequel l'extrémité de presse saillante (31) comprend une surface concave (311) formée en étant évidée pour être arrondie à partir d'une profondeur prédéterminée de sorte que la surface concave (311) est en contact étroit avec une surface extérieure de l'arbre fixe (S).

6. Le cintre de fixation de la revendication 1, dans lequel la vis de fixation presse l'arbre fixe (S) à partir de chacun des côtés supérieur et inférieur de l'arbre fixe (S), ou de chacun des côtés opposés de l'arbre fixe (S).

7. Le support de fixation de la revendication 1, dans lequel le support de fixation du bras oscillant comprend une pièce de fixation par adhérence (5), (5') permettant de fixer le support de fixation (1), (1') au bras oscillant par soudage le long de trois surfaces périphériques du support de fixation (1), (1').
